# EUROPÄISCHE PATENTSCHRIFT

(11) **EP 1 140 313 B1**
(45) Veröffentlichungstag und Bekanntmachung des Hinweises auf die Patenterteilung: **02.07.2003**
(21) Anmeldenummer: 99964649.0
(22) Anmeldetag: 22.12.1999
(51) Int. Cl.: B01D 9/02, B01D 61/14, C06B 21/00, C06B 25/34

(54) **VERFAHREN ZUR HERSTELLUNG VON KRISTALLEN AUS LÖSUNGEN**
METHOD FOR PRODUCING CRYSTALS FROM SOLUTIONS
PROCEDE POUR PRODUIRE DES CRISTAUX A PARTIR DE SOLUTIONS

(30) Priorität: 23.12.1998 DE 19859876
(43) Veröffentlichungstag der Anmeldung: 10.10.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: TEIPEL, Ulrich, D-76327 Pfinztal (DE); FÖRTER-BARTH, Ulrich, D-76199 Karlsruhe (DE)
(86) Internationale Anmeldenummer: EP9910270
(87) Internationale Veröffentlichungsnummer: WO00038812

(56) Entgegenhaltungen:
- EP-A- 0 288 122
- EP-A- 0 547 512
- WO-A-94/11309
- FR-A- 2 672 816
- US-A- 4 207 183
- US-A- 4 784 766
- PATENT ABSTRACTS OF JAPAN vol. 012, no. 209 (C-504), 15. Juni 1988 (1988-06-15) & JP 63 007802 A (KOBE STEEL LTD), 13. Januar 1988 (1988-01-13)
- PATENT ABSTRACTS OF JAPAN vol. 010, no. 049 (C-330), 26. Februar 1986 (1986-02-26) & JP 60 193503 A (KOBE SEIKOSHO KK), 2. Oktober 1985 (1985-10-02)

## Beschreibung

Die Erfindung betrifft ein Verfahren zur Herstellung von Kristallen aus thermisch empfindlichen Feststoffen, indem der Feststoff in wenigstens einem Lösungsmittel gelöst und die Lösung durch Abziehen des Lösungsmittels über die Sättigungskonzentration des Feststoffs unter Bildung der Feststoff-Kristallisate aufkonzentriert wird.

Die Kristallisation ist ein bekanntes thermisches Gewinnungs- oder Trennverfahren, wobei eine Komponente eines aus wenigstens zwei Komponenten bestehenden homogenen Systems, beispielsweise einer Lösung, einer Schmelze oder eines Gasgemischs, unter Bildung einer festen Phase abgetrennt wird. Bei der Kristallisation eines oder mehrerer Feststoffe aus einer Lösung mit molekulardisperser Verteilung der Feststoffe in einem Lösungsmittel wird die Lösung durch Kühlen (Kühlungskristallisation), Verdampfen des Lösungsmittels (Verdampfungskristallisation) oder Kombination beider Varianten übersättigt. Durch Abbau dieser Übersättigung fällt der Feststoff als Kristallisat an, das mechanisch von der Restlösung abgetrennt wird. Die Übersättigung kann durch Unterdruck (Vakuumkristallisation), Aussalzen, Ausfällen, gegebenenfalls durch Zugabe von Impfkeimen, oder durch Zuführung mechanischer Energie (Agitation) unterstützt werden. Insbesondere die Kristallisation aus Lösungen findet vielfältig Verwendung zur Reinigung oder Trennung von stoffgemischen, zur Aufkonzentrierung von Lösungen, zur Herstellung von Partikeln hoher Reinheit oder bestimmter Partikelform oder zur Modifikation der kristallinen Phase, um beispielsweise Kristallfehler auszumerzen.

Nachteilig bei den bekannten Kristallisationsverfahren, nämlich der Kühlungs- und der Verdampfungskristallisation, ist der hohe Energieverbrauch, da der Lösung Wärme zugeführt und/oder Wärme entzogen werden muß, was insbesondere bei Verwendung eines Lösungsmittels mit hoher Wärmekapazität c, wie beispielsweise Wasser (c ≈ 4,2 J/gK), erhebliche Kosten verursacht. Bei thermisch empfindlichen Stoffen besteht die Gefahr einer Beeinträchtigung der Kristalle bzw. der Feststoffstruktur selbst. Auch bei nur geringer Beeinträchtigung kann es zu Kristallfehlern, Einschlüssen von Zersetzungsprodukten od. dgl. kommen. Bei thermisch sensiblen Treib-, Spreng- und Explosivstoffen erhöht sich das Sicherheitsrisiko mit steigender Temperatur und zunehmender Kristallmasse.

Der Erfindung liegt die Aufgabe zugrunde, ein Verfahren zur Herstellung von Kristallen aus thermisch empfindlichen Feststoffen vorzuschlagen, das weitestgehend ohne Energieverbrauch auskommt und darüber hinaus eine thermische Beeinträchtigung der Kristalle bzw. der Feststoffe zuverlässig vermeidet.

Erfindungsgemäß wird diese Aufgabe bei einem Verfahren der eingangs genannten Art dadurch gelöst, daß das Lösungsmittel durch eine im wesentlichen semipermeable Membran permeiert wird.

Die Erfindung zeichnet sich durch eine völlige Abkehr von herkömmlichen Kristallisationsverfahren aus, indem die zur Kristallisation erforderliche Überschreitung der Sättigungskonzentration durch Permeation des Lösungsmittels durch eine im wesentlichen semipermeable Membran erreicht wird. Die semipermeable Membran ist für das Lösungsmittel und gegebenenfalls für im Lösungsmittel enthaltene Verunreinigungen permeabel, aber für den zu kristallisierenden Feststoff nicht passierbar. Durch Permeation des Lösungsmittels durch die Membran wird die verbleibende Lösung aufkonzentriert und somit die Sättigungskonzentration des gelösten Feststoffs überschritten, was zu der erwünschten Kristallisation führt. Bei einer Übersättigung der Lösung kann die Kristallisation zusätzlich mittels bekannter Verfahren unterstützt werden, beispielsweise durch Impfen der Lösung mit Eigen- oder Fremdkeimen.

Es sind zwar verschiedene Membrantrennverfahren, wie die Osmose, Umkehrosmose, die Nano-, Ultra- und Mikrofiltration, die Dialyse oder die Elektrodialyse bekannt, bei denen die Triebkräfte der selektiven Permeation durch eine Membran z. B. auf Konzentrations-, Druck- oder elektrischen Potentialdifferenzen beruhen. Die bekannten Membranverfahren werden jedoch ausschließlich zur Reinigung oder Rückgewinnung von Lösungsmitteln, zur Aufkonzentrierung gelöster bzw. dispergierter Stoffe oder zur Trennung verschiedenartiger, beispielsweise hoch- und niedermolekularer dispergierter Komponenten verwendet. Sie werden z. B. zur Meer-, Trink- und Abwasseraufbereitung, zur Entsalzung, zur Trennung azeotroper Gemische, zur Sterilfiltration oder für verschiedene Aufreinigungsverfahren in der Lebensmitteloder Textilindustrie sowie auf dem Gebiet der Medizintechnik, aber nicht zur Gewinnung von kristallinen Feststoffen eingesetzt.

Die DE 23 48 807 A1 beschreibt ein Verfahren zum Ausscheiden von Weinstein aus Wein oder Schaumwein, wobei der Wein mittels Umkehrosmose in Permeat und Konzentrat getrennt und im Konzentrat kristalliner Weinstein ausgeschieden wird. Nach Ausfiltern des unerwünschten Weinsteins werden Permeat und Konzentrat wieder zu Wein vereinigt. Auch diese Druckschrift, bei der es ausschließlich um die Reinigung des Weins durch Ausscheiden des Weinsteins geht, konnte der Fachwelt bislang keine Anregung geben, Membranverfahren gezielt zur Herstellung von Kristallen aus thermisch empfindlichen Feststoffen einzusetzen und dabei die Möglichkeit zu nutzen, die Beschaffenheit der erhaltenen Kristalle durch Variation der Verfahrensparameter zu steuern.

Während erfindungsgemäß die zur Überschreitung der Sättigungskonzentration der Lösung bzw. zur Kristallisation erforderliche Permeation des Lösungsmittels durch die Membran auf einfache Weise durch den hydrostatischen Druck der z. B. oberhalb der Membran angeordneten Kristallisationslösung bewirkt werden kann, ist in bevorzugter Ausführung vorgesehen, zwischen der Lösung und dem Permeat ein Druckgefälle aufzubauen, das durch Unterdruck auf der Permeatseite oder dadurch erzeugt wird, daß die Lösung mit Überdruck beaufschlagt wird, der je nach Stoffsystem und der im Einzelfall verwendeten Membran zwischen 1 und 100 bar betragen kann. Auf diese Weise ist die Permeations- und damit die Kristallbildungsgeschwindigkeit und ferner die Beschaffenheit der erzeugten Kristalle steuerbar, indem die Kristallbildung mit steigendem Überdruck und somit mit steigender Permeation des Lösungsmittels durch die Membran beschleunigt wird. Sind z. B. große und regelmäßige Kris.talle erwünscht, so wird die Lösung mit einem nur geringen Überdruck beaufschlagt, um ein langsames Kristallwachstum zu gewährleisten. Wird dagegen ein möglichst feinkristallines Produkt hoher Reinheit gewünscht, so wird der Druck erhöht, so daß die Kristallisation schnell erfolgt. In letztgenanntem Fall kann die Lösung zusätzlich agitiert, z.B. gerührt werden.

Je nach Art des aus Lösungsmittel und Feststoff bestehenden Stoffsystems kann das erfindungsgemäße Verfahren nach Art von solchen bekannten Membranverfahren durchgeführt werden, bei denen die Triebkraft für die Permeation des Lösungsmittels durch die Membran eine Druckdifferenz zwischen Permeat und Lösung ist, wie die Mikro-, Ultra-, Nano- oder Hyperfiltration (Umkehrosmose). Die genannten Membranverfahren richten sich insbesondere nach dem Moleküldurchmesser des gelösten Feststoffs, der bei der Mikrofiltration zwischen 20 nm und 20 µm, bei der Ultrafiltration zwischen 2 nm und 20 nm, bei der Nanofiltration zwischen 1 nm und 5 nm und bei der Hyperfiltration kleiner als 3 nm beträgt. Die verwendeten Membranen unterscheiden sich im wesentlichen durch ihre Porosität, wobei in der Regel für größere Moleküldurchmesser des Feststoffs eine höhere Porosität gewählt wird, um eine möglichst hohe Permeation des Lösungsmittels bei einer möglichst geringen Druckdifferenz zwischen Lösung und Permeat zu erzielen. Während beispielsweise bei der Hyperfiltration, bei der der Moleküldurchmesser des gelösten Feststoffs etwa dem Moleküldurchmesser des Lösungsmittels entspricht bzw. diesen nur geringfügig übertrifft, homogene und dichte Membranen verwendet werden, die ausschließlich eine Permeation des Lösungsmittels zulassen, werden beispielsweise bei der Ultrafiltration, bei der der Moleküldurchmesser des Feststoffs größer als der Moleküldurchmesser des Lösungsmittels ist, poröse Membranen verwendet, die nur höhermolekulare gelöste sowie suspendierte bzw. emulgierte Komponenten zurückhalten. Bei der Mikrofiltration werden beispielsweise nur suspendierte feindisperse (ungelöste) Komponenten zurückgehalten.

Als thermisch empfindliche Feststoffe kommen vornehmlich Treib- und/oder Explosivstoffe, Pharmazeutika und/oder pharmazeutische Wirkstoffe, Hormone und/oder Hormonderivate sowie homöopathische Wirkstoffe bzw. Konzentrate pflanzlicher Wirkstoffe in Frage, welche bei den bekannten Kristallisationsverfahren, wie der Kühlungs- oder Verdampfungskristallisation, thermisch beeinträchtigt werden können bzw. - im Fall von Treib- und Explosivstoffen - ein erhebliches Gefährdungspotential darstellen.

Eine bevorzugte Ausführung des erfindungsgemäßen Verfahrens sieht vor, daß die Lösung auf einer im wesentlichen konstanten Temperatur gehalten wird. Durch eine solche isotherme Prozeßführung werden die thermisch empfindlichen Stoffe schonend kristallisiert, wobei das thermodynamische Gleichgewicht erhalten bleibt und Kristalle mit hoher Reinheit und keinen oder nur geringen inneren Spannungen erzeugt werden. Ein weiterer Vorteil einer im wesentlichen isothermen Prozeßführung besteht darin, daß temperaturbedingte Änderungen der Kristallmodifikation, wie sie viele thermisch empfindliche Feststoffe aufweisen, verhindert werden. Nur beispielhaft sei hierzu erwähnt, daß Ammoniumnitrat (AN) - ein verbreitet in Gasgeneratoren, Rückstoßflugkörpern oder auch Airbags eingesetzter Explosivstoff - in Abhängigkeit von der Temperatur in fünf verschiedenen Kristallmodifikationen vorkommt, nämlich im Temperaturintervall zwischen 125°C und seinem Schmelzpunkt von 169,5°C kubisch (Modifikation I), im Temperaturintervall zwischen 84°C und 125°C bei einer Dichte von ca. 1,67 g/cm³ tetragonal (Modifikation II), im Temperaturintervall von 32°C bis 84°C bei einer Dichte von ca. 1,66 g/cm³ orthorhombisch (Modifikation III), zwischen -18°C und 32°C ebenfalls orthorhombisch (Modifikation IV), aber mit einer Dichte von ca. 1,73 g/cm³, und bei Temperaturen unterhalb -18°C orthorhombisch pseudotetragonal (Modifikation V). Insbesondere aufgrund der Dichteunterschiede der einzelnen Modifikationen kommt es zu Spannungen und Rißbildungen im Kristallgefüge dieses Explosivstoffs, der folglich in Form von reinen und spannungsfreien Kristallen mit herkömmlichen Kristallisationsverfahren nicht oder nur mit großem Aufwand darstellbar ist.

Bei der Herstellung der Kristallisationslösung ist es zweckmäßig, den Feststoff im Bereich seiner Sättigungskonzentration in dem Lösungsmittel zu lösen. Insbesondere kann der Sättigungsgrad der Lösung in Abhängigkeit von dem jeweiligen Stoffsystem aus Feststoff(en) bzw. Lösungsmittel(n) variiert werden, um beispielsweise bei anschließender Permeation des Lösungsmittels durch die Membran eine spontane oder auch verzögerte Kristallisation zu bewirken und die Beschaffenheit der Kristalle dadurch zu steuern.

In bevorzugter Ausführung ist vorgesehen, daß Membranen mit geringer Verblockungsneigung verwendet werden. Hierfür können z. B. asymmetrische Membranen verwendet werden, die eine auf einem hochporösen Traggerüst aufgebrachte aktive Schicht mit der gewünschten Porosität aufweisen. Durch die Anordnung einer solchen asymmetrischen Membran mit ihrer aktiven Schicht auf der der Lösung zugewandten Seite wird ein Verblocken der Membran durch in die Poren diffundierende Partikel weitestgehend verhindert. Weiterhin können Composite-Membranen verwendet werden, die ein- oder beidseitig auf ein hochporöses Stützgerüst aufgebrachte aktive Schichten mit der gewünschten Porosität aufweisen. Alternativ oder zusätzlich ist in weiterhin bevorzugter Ausführung vorgesehen, daß die Membran zur Vermeidung oder Ablösung sie verblockender Deckschichten in Bewegung, beispielsweise in Schwingung versetzt oder mit Druckstößen beaufschlagt wird. Dadurch werden z. B. an der der Lösung zugewandten aktiven Schicht der Membran anhaftende Kristalle gelöst und eine stetige Permeation des Lösungsmittels durch die Membran gewährleistet. Die Membran wird bevorzugt mit Druckstößen entgegen der Permeationsrichtung beaufschlagt.

Zur Durchführung des erfindungsgemäßen Verfahrens können Membranen auf der Basis natürlicher Polymere, wie Celluloseacetate, Celluloseacetat-Butyrate, Celluloseacetat-Propionate oder dergleichen, Membranen auf der Basis synthetischer Polymere Polymere, wie Polyamide, Polysulfone, Polyimide, Polyamidhydrazide, Polybenzimidazol, Polyacrylsäure, Polyacrylnitril oder dergleichen, Membranen auf der Basis von Metallen oder Membranen auf der Basis von Mineralien, wie Glas, Keramik oder dergleichen, verwendet werden.

Für das erfindungsgemäße Kristallisationsverfahren können aus der Membrantechnologie bekannte Konstruktionseinheiten (Module), wie Rohr-, Hohlfaser-, Kapillarrohr-, Plattenmodule oder Rührzellen verwendet werden, die je nach Stoffsystem miteinander kombiniert, z.B. parallel oder in Reihe geschaltet und/oder mit Membranen verschiedener Porosität bestückt werden können. Bei Verwendung eines Rohr- oder Kapillarrohrmoduls kann die zur Kristallisation erforderliche Permeation des Lösungsmittels beispielsweise durch die Länge des Moduls eingestellt werden, wobei das Modul oder mehrere parallele Module schlaufenförmig angeordnet werden können.

Nachstehend ist das erfindungsgemäße Verfahren anhand von Ausführungsbeispielen näher erläutert:

### Beispiel 1:

Zur Herstellung feinkristalliner Partikel des Explosivstoffs 3-Nitro-1,2,4-triazol-5-on (NTO) hoher Reinheit wird eine im wesentlichen gesättigte Lösung von NTO in iso-Propanol vorgelegt. Die Lösung wird einer semipermeablen Membran mit einem Rückhaltevermögen für gelöste Stoffe mit einem Moleküldurchmesser im Bereich von 1 nm (Nanofiltration) zugeführt und die Lösung mit einem Überdruck zwischen 10 und 20 bar beaufschlagt. Während das Lösungsmittel (isoPropanol) durch die z. B. als Composite-Membran ausgebildete Membran permeiert, wird der Feststoff (NTO) von der Membran zurückgehalten und dessen Sättigungskonzentration in der Lösung überschritten, was zu einer Keimbildung mit anschließendem Kristallwachstum führt. Die Kristallisation erfolgt in einem Rohrmodul, wobei die Kristallsuspension zur Steuerung des Kristallwachstums einem dem Rohrmodul nachgeschalteten Rührzellenreaktor übergeben wird. Auf diese Weise ist insbesondere eine kontinuierliche Durchführung des Kristallisationsverfahrens möglich.

### Beispiel 2:

Zur Herstellung von reinen und spannungsfreien Partikeln des Explosivstoffs Cyclotetramethylentetranitramin (Oktogen, HMX) wird eine im wesentlichen gesättigte Lösung von HMX in einem Lösungsmittelgemisch aus Dimethylformamid (DMF) und Aceton vorgelegt, die Lösung einer semipermeablen Membran gemäß Beispiel 1 zugeführt und mit Überdruck beaufschlagt. HMX kommt in Abhängigkeit von der Temperatur in vier verschiedenen Kristallmodifikationen mit unterschiedlichen Dichten vor (Modifikation α mit einer Dichte von 1,84 g/cm³, Modifikation β mit einer Dichte von 1,90 g/cm³, Modifikation γ mit einer Dichte von 1,78 g/cm³ und Modifikation δ mit einer Dichte von 1,58 g/cm³). Zum Erhalt von spannungsfreien Kristallen der Modifikation α wird das Lösungsmittelgemisch bei im wesentlichen konstanter Temperatur, z. B. etwa 20°C, durch die Membran permeiert, wobei der Feststoff (α-HMX) aus der Lösung ausgeschieden wird.

### Beispiel 3:

Zur Herstellung von reinen und spannungsfreien Partikeln des Explosivstoffs 2,4,6,8,10,12-Hexanitro-2,4,6,8,10,12-hexaazaisowurtzitan (HNIW, CL20) wird eine im wesentlichen gesättigte Lösung von HNIW vorgelegt. HNIW kommt in Abhängigkeit von der Temperatur in vier verschiedenen Kristallmodifikationen mit unterschiedlichen Dichten vor (Modifikation α mit einer Dichte von 1,97 g/cm³, Modifikation β mit einer Dichte von 1,99 g/cm³, Modifikation γ mit einer Dichte von 1,93 g/cm³ und Modifikation ε mit einer Dichte von 2,03 g/cm³). Zum Erhalt von spannungsfreien Kristallen der Modifikation α erfolgt die Kristallisation gemäß Beispiel 2.

## Patentansprüche

1. Verfahren zur Herstellung von Kristallen aus thermisch empfindlichen Feststoffen, indem der Feststoff in wenigstens einem Lösungsmittel gelöst wird und die Lösung durch Abziehen des Lösungsmittels über die Sättigungskonzentration des Feststoffs unter Bildung der Feststoff-Kristallisate aufkonzentriert wird, **dadurch gekennzeichnet, daß** das Lösungsmittel durch eine im wesentlichen semipermeable Membran permeiert wird.

2. Verfahren nach Anspruch 1, **dadurch gekennzeichnet, daß** zwischen der Lösung und dem Permeat ein Druckgefälle erzeugt wird.

3. Verfahren nach Anspruch 1 oder 2, **dadurch gekennzeichnet, daß** die Lösung mit Überdruck beaufschlagt wird.

4. Verfahren nach Anspruch 2 oder 3, **dadurch gekennzeichnet, daß** die Lösung mit Überdruck zwischen 1 und 100 bar beaufschlagt wird.

5. Verfahren nach einem der Ansprüche 1 bis 4, **dadurch gekennzeichnet, daß** die Lösung auf einer im wesentlichen konstanten Temperatur gehalten wird.

6. Verfahren nach einem der Ansprüche 1 bis 5, **dadurch gekennzeichnet, daß** der Feststoff im Bereich seiner Sättigungskonzentration in dem Lösungsmittel gelöst wird.

7. Verfahren nach Anspruch 6, **dadurch gekennzeichnet, daß** der Sättigungsgrad der Lösung in Abhängigkeit von dem jeweiligen Feststoff und/oder dem jeweiligen Lösungsmittel variiert wird.

8. Verfahren nach einem der Ansprüche 1 bis 7, **dadurch gekennzeichnet, daß** Membranen mit geringer Verblockungsneigung verwendet werden.

9. Verfahren nach Anspruch 8, **dadurch gekennzeichnet, daß** asymmetrische Membranen verwendet werden.

10. Verfahren nach Anspruch 8 oder 9, **dadurch gekennzeichnet, daß** Composite-Membranen verwendet werden.

11. Verfahren nach einem der Ansprüche 1 bis 10, **dadurch gekennzeichnet, daß** die Membran zur Vermeidung oder Ablösung von sie verblockenden Deckschichten in Bewegung versetzt wird.

12. Verfahren nach Anspruch 11, **dadurch gekennzeichnet, daß** die Membran mit Druckstößen beaufschlagt wird.

13. Verfahren nach Anspruch 11 oder 12, **dadurch gekennzeichnet, daß** die Membran mit Druckstößen entgegen der Permeationsrichtung beaufschlagt wird.

14. Verfahren nach einem der Ansprüche 11 bis 13, **dadurch gekennzeichnet, daß** die Membran in Schwingung versetzt wird.

15. Verfahren nach einem der Ansprüche 1 bis 14, **dadurch gekennzeichnet, daß** Membranen auf der Basis natürlicher Polymere, wie Celluloseacetate, Celluloseacetat-Butyrate, Celluloseacetat-Propionate oder dergleichen, verwendet werden.

16. Verfahren nach einem der Ansprüche 1 bis 14, **dadurch gekennzeichnet, daß** Membranen auf der Basis synthetischer Polymere, wie Polyamide, Polysulfone, Polyimide, Polyamidhydrazide, Polybenzimidazole, Polyacrylsäure, Polyacrylnitrile oder dergleichen, verwendet werden.

17. Verfahren nach einem der Ansprüche 1 bis 14, **dadurch gekennzeichnet, daß** Membranen auf der Basis von Metallen verwendet werden.

18. Verfahren nach einem der Ansprüche 1 bis 14, **dadurch gekennzeichnet, daß** Membranen auf der Basis von Mineralien, wie Glas, Keramik oder dergleichen, verwendet werden.

19. Verfahren nach einem der Ansprüche 1 bis 18, **dadurch gekennzeichnet, daß** die Membranen aus Rohrmodulen gebildet werden.

20. Verfahren nach einem der Ansprüche 1 bis 18, **dadurch gekennzeichnet, daß** die Membranen aus Kapillarrohrmodulen gebildet werden.

21. Verfahren nach einem der Ansprüche 1 bis 18, **dadurch gekennzeichnet, daß** die Membranen aus Hohlfasermodulen gebildet werden.

22. Verfahren nach einem der Ansprüche 1 bis 18, **dadurch gekennzeichnet, daß** die Membranen aus Plattenmodulen gebildet werden.

23. Verfahren nach einem der Ansprüche 1 bis 22, **dadurch gekennzeichnet, daß** die Lösung agitiert wird.

24. Verfahren nach einem der Ansprüche 1 bis 23 zur Herstellung von Treib- und/oder Explosivstoffen in Kristallform.

25. Verfahren nach einem der Ansprüche 1 bis 23 zur Herstellung von Pharmazeutika und/oder pharmazeutischen Wirkstoffen in Kristallform.

26. Verfahren nach einem der Ansprüche 1 bis 23 zur Herstellung von Hormonen und/oder Hormonderivaten in Kristallform.

27. Verfahren nach einem der Ansprüche 1 bis 22 zur Herstellung von homöopathischen Wirkstoffen in Kristallform.

## Claims

1. Process for the production of crystals from thermally sensitive solids by dissolving the solid in at least one solvent and concentrating the solution to above the saturation concentration of the solid by drawing off the solvent to form the solid crystallisates, **characterised in that** the solvent is permeated by an essentially semi-permeable membrane.

2. Process according to Claim 1, **characterised in that** a pressure difference is generated between the solution and the permeate.

3. Process according to Claim 1 or 2, **characterised in that** the solution is subjected to excess pressure.

4. Process according to Claim 2 or 3, **characterised in that** the solution is subjected to excess pressure between 1 and 100 bar.

5. Process according to one of Claims 1 to 4, **characterised in that** the solution is held at an essentially constant temperature.

6. Process according to one of Claims 1 to 5, **characterised in that** the solid is dissolved in the solvent in the range of its saturation concentration.

7. Process according to Claim 6, **characterised in that** the degree of saturation of the solution is varied as a function of the respective solid and/or the respective solvent.

8. Process according to one of Claims 1 to 7, **characterised in that** membranes with a low blocking tendency are used.

9. Process according to Claim 8, **characterised in that** asymmetric membranes are used.

10. Process according to Claim 8 or 9, **characterised in that** composite membranes are used.

11. Process according to one of Claims 1 to 10, **characterised in that** the membrane is set in motion to prevent or detach coatings blocking it.

12. Process according to Claim 11, **characterised in that** the membrane is subjected to pressure surges.

13. Process according to Claim 11 or 12, **characterised in that** the membrane is subjected to pressure surges contrary to the direction of permeation.

14. Process according to one of Claims 11 to 13, **characterised in that** the membrane is caused to vibrate.

15. Process according to one of Claims 1 to 14, **characterised in that** membranes based on natural polymers such as cellulose acetates, cellulose acetate- butyrates, cellulose acetate propionates or similar are used.

16. Process according to one of Claims 1 to 14, **characterised in that** membranes on the basis of synthetic polymers such as polyamides, polysulphones, polyimides, polyamide hydrazides, polybenzimidazoles, polyacrylic acid, polyacrylonitriles or similar are used.

17. Process according to one of Claims 1 to 14, **characterised in that** metal-based membranes are used.

18. Process according to one of Claims 1 to 14, **characterised in that** membranes base on minerals such as glass, ceramic or similar are used.

19. Process according to one of Claims 1 to 18, **characterised in that** the membranes are formed from tube modules.

20. Process according to one of Claims 1 to 18, **characterised in that** the membranes are formed from capillary tube modules.

21. Process according to one of Claims 1 to 18, **characterised in that** the membranes are formed from hollow fibre modules.

22. Process according to one of Claims 1 to 18, **characterised in that** the membranes are formed from plate modules.

23. Process according to one of Claims 1 to 22, **characterised in that** the solution is agitated.

24. Process according to one of Claims 1 to 23 for the production of propellants and/or explosives in crystal form.

25. Process according to one of Claims 1 to 23 for the production of pharmaceuticals and/or pharmaceutical active agents in crystal form.

26. Process according to one of Claims 1 to 23 for the production of hormones and/or hormone derivatives in crystal form.

27. Process according to one of Claims 1 to 22 for the production of homeopathic active agents in crystal form.

## Revendications

1. Procédé de production de cristaux à partir de solides thermiquement sensibles, en dissolvant le solide dans au moins un solvant et en concentrant la solution par retrait du solvant au-delà de la concentration de saturation du solide avec formation des produits de cristallisation solides,
**caractérisé en ce qu'**
on fait passer le solvant à travers une membrane essentiellement semi-perméable.

2. Procédé selon la revendication 1,
**caractérisé en ce qu'**
on produit une chute de pression entre la solution et le produit de pénétration.

3. Procédé selon la revendication 1 ou 2,
**caractérisé en ce qu'**
on applique une surpression à la solution.

4. Procédé selon la revendication 2 ou 3,
**caractérisé en ce qu'**
on applique à la solution une surpression comprise entre 1 et 100 bars.

5. Procédé selon l'une des revendications 1 à 4,
**caractérisé en ce qu'**
on maintient la solution à une température sensiblement constante.

6. Procédé selon l'une des revendications 1 à 5,
**caractérisé en ce qu'**
on dissout le solide dans le solvant dans l'intervalle de sa concentration de saturation.

7. Procédé selon la revendication 6,
**caractérisé en ce qu'**
on fait varier le degré de saturation de la solution en fonction du solide considéré et/ou du solvant considéré.

8. Procédé selon l'une des revendications 1 à 7,
**caractérisé en ce qu'**
on utilise des membranes ayant une faible tendance au blocage.

9. Procédé selon la revendication 8,
**caractérisé en ce qu'**
on utilise des membranes asymétriques.

10. Procédé selon la revendication 8 ou 9,
**caractérisé en ce qu'**
on utilise des membranes composites.

11. Procédé selon l'une des revendications 1 à 10,
**caractérisé en ce qu'**
on met la membrane en mouvement pour éviter ou détacher les couches de revêtement qui la bloquent.

12. Procédé selon la revendication 11,
**caractérisé en ce qu'**
on applique à la membrane de brusques variations de pression.

13. Procédé selon les revendications 11 ou 12,
**caractérisé en ce qu'**
on applique à la membrane des chocs de pression dans le sens contraire à la direction de pénétration.

14. Procédé selon l'une des revendications 11 à 13,
**caractérisé en ce qu'**
on fait osciller la membrane.

15. Procédé selon l'une des revendications 1 à 14,
**caractérisé en ce qu'**
on utilise des membranes à base de polymères naturels, comme des acétates de cellulose, des acétates-butyrates de cellulose, des acétates-propionates de cellulose ou analogues.

16. Procédé selon l'une des revendications 1 à 14,
**caractérisé en ce qu'**
on utilise des membranes à base de polymères synthétiques, comme des polyamides, des polysulfones, des polyimides, des polyamides hydrazides, des polybenzimidazoles, de l'acide polyacrylique, des polyacrylonitriles ou analogues.

17. Procédé selon l'une des revendications 1 à 14,
**caractérisé en ce qu'**
on utilise des membranes à base de métaux.

18. Procédé selon l'une des revendications 1 à 14,
**caractérisé en ce qu'**
on utilise des membranes à base de minéraux, comme le verre, la céramique ou analogue.

19. Procédé selon l'une des revendications 1 à 18,
**caractérisé en ce qu'**
on forme des membranes à partir de modules tubulaires.

20. Procédé selon l'une des revendications 1 à 18,
**caractérisé en ce qu'**
on forme des membranes à partir de modules tubulaires capillaires.

21. Procédé selon l'une des revendications 1 à 18,
**caractérisé en ce que**
les membranes sont formées à partir de modules de fibres creuses.

22. Procédé selon l'une des revendications 1 à 18,
**caractérisé en ce que**
les membranes sont formées à partir de modules à plateaux.

23. Procédé selon l'une des revendications 1 à 22,
**caractérisé en ce qu'**
on agite la solution.

24. Procédé selon l'une des revendications 1 à 23, pour la production de carburants et/ou d'explosifs sous forme de cristaux.

25. Procédé selon l'une des revendications 1 à 23, pour la production de produits pharmaceutiques et/ou de substances pharmaceutiques sous forme de cristaux.

26. Procédé selon l'une des revendications 1 à 23, pour la production d'hormones et/ou de dérivés d'hormones sous forme de cristaux.

27. Procédé selon l'une des revendications 1 à 22, pour la production de substances actives homéopathiques sous forme de cristaux.
